# EUROPÄISCHE PATENTSCHRIFT

(11) **EP 2 634 094 B1**
(45) Veröffentlichungstag und Bekanntmachung des Hinweises auf die Patenterteilung: **02.04.2014**
(21) Anmeldenummer: 12157355.4
(22) Anmeldetag: 28.02.2012
(51) Int. Cl.: B64F 1/32, B64F 1/36

(54) **System zum Beladen von Containern**
System for loading containers
Système de chargement de conteneurs

(43) Veröffentlichungstag der Anmeldung: 04.09.2013
(73) Patentinhaber: Lödige, Jan, 33100 Paderborn (DE)
(72) Erfinder: Lödige, Jan, 33100 Paderborn (DE)
(74) Vertreter: Ostermann, Thomas

(56) Entgegenhaltungen:
- EP-A1- 0 556 037
- EP-A2- 1 980 490
- WO-A1-03/076267
- WO-A2-2005/050405

## Beschreibung

Die Erfindung betrifft ein Beladesystem zum Beladen von Containern mit Ladegut in einem Terminal eines Flughafens, mit einer Anzahl von jeweils den Containern zugeordneten Fördereinrichtungen, mittels derer das Ladegut den Containern jeweils an einer Beladestelle sequentiell zuführbar und innerhalb derselben positionierbar ist, und mit einer Bedieneinheit zum Ansteuern von Fördermitteln der Fördereinrichtung zum Verbringen des Ladegutes in eine Ablageposition innerhalb des Containers.

Aus der EP 1 980 490 A1, die den nächstliegenden Stand der Technik darstellt und den Oberbegriff des unabhängigen Anspruchs 1 offenbart, ist eine Beladevorrichtung zum Beladen von Containern mit Ladegut, wie Gepäckstücken oder anderen Gütern, bekannt, die in einem Terminal eines Flughafens angeordnet ist. Der Container weist eine Beladeöffnung auf, in die ein teleskopartiger Arm einer Fördereinrichtung einfahrbar ist, so dass das Ladegut sequentiell von einer zu dem Container führenden Längsförderer der Fördereinrichtung innerhalb des Containers ablegbar ist. Damit das Ladegut platzsparend innerhalb des Containers ablegbar ist, weist die Fördereinrichtung an einem dem Container zugewandten Ende eine Übergabeeinheit auf, mittels derer das Ladegut in Längs- und/oder Querrichtung innerhalb des Containers verteilbar ist. Zusätzlich ist die Fördereinrichtung relativ zu dem Container in der Höhe verschiebbar gelagert, so dass das Ladegut innerhalb des Containers übereinander stapelbar ist. Die Betätigung der Übergabeeinheit erfolgt mittels einer Bedienperson, die an der Beladungsstelle einen Steuerknüppel einer Bedieneinheit betätigt. Die Beladevorrichtung, die sich in der Praxis grundsätzlich bewährt hat, weist jedoch den Nachteil auf, dass für die Befüllung des Containers jeweils eine Bedienperson eingesetzt werden muss. Dadurch, dass der Bedienplatz in der Nähe des Containers angeordnet ist, ist das Ladegut für die Bedienpersonen zugänglich, was aus sicherheitstechnischen Gründen nicht wünschenswert ist.

Aufgabe der vorliegenden Erfindung ist es daher, ein System zum Beladen von Containern mit Ladegut in einem Terminal eines Flughafens derart weiterzubilden, dass der Kostenaufwand für ein sicheres und optimales Beladen einer Mehrzahl von Containern auf einfache Weise verringert wird.

Zur Lösung der Aufgabe ist die Erfindung in Verbindung mit dem Oberbegriff des Patentanspruchs 1 dadurch gekennzeichnet, dass den Fördereinrichtungen und/oder den Beladestellen jeweils eine optische Erkennungseinrichtung zum Erfassen von Videodaten zugeordnet sind, dass eine zentrale Steuereinheit vorgesehen ist, enthaltend eine Bildverarbeitung zur Verarbeitung von durch die optische Erkennungseinrichtung bereitgestellten Videodaten und zur Ansteuerung eines Monitors, dass ein Monitor zur Darstellung der Videodaten vorgesehen ist, dass der Monitor und die Bedieneinheit ortsfern von den Beladestellen an einer zentralen Bedienstelle angeordnet sind, dass die zentrale Steuereinheit eine Förderansteuerung aufweist, mittels derer in Abhängigkeit von über die Bedieneinheit eingegebenen Förderbefehlen die jeweiligen Fördereinrichtungen ansteuerbar sind, und dass die zentrale Steuereinheit eine Bildumschaltung aufweist, so dass in Abhängigkeit von einem Anforderungssignal ein Wechsel der in dem Monitor dargestellten Videodaten von einer ersten Beladestelle zu einer zweiten Beladestelle erfolgt.

Die Erfindung sieht ein fernbedienbares Beladen mehrerer Container durch eine einzige Bedienperson vor. Zum einen kann der Zeitaufwand für das Beladen mehrerer Container verringert werden. Zum anderen ermöglicht die Erfindung die Vermeidung einer Zugänglichkeit des zu beladenden Ladegutes für die Bedienperson, was den gesteigerten Sicherheitsanforderungen hinsichtlich Manipulation des Ladegutes Rechnung trägt. Die Fördereinrichtungen und die Container können somit in einem nicht zugänglichen, abgeschlossenen Förderraum angeordnet sein, während die Bedienperson in einem ortsfern angeordneten Bedienraum die Beladevorgänge steuert. Den Beladestellen sind jeweils Videodaten liefernde optische Erkennungseinrichtungen zugeordnet, so dass der Bedienperson mittels eines Monitors aktuelle Videodaten von dem Beladevorgang vorliegen, damit sie über die Bedieneinheit die Fördereinrichtungen so ansteuern kann, dass der entsprechende Container unter optimaler Ausnutzung des durch ihn zur Verfügung gestellten Laderaums mit Ladegut beladen werden kann. Zur Verarbeitung der von der optischen Erkennungseinrichtung bereitgestellten Videodaten, zur Ansteuerung der Fördereinrichtungen sowie für eine Bildumschaltung des Bildschirms in Abhängigkeit von einem den Abschluss eines Beladevorgangs kennzeichnenden Anforderungssignals ist eine zentrale Steuereinheit vorgesehen, die - wie die Bedieneinheit und der Monitor - an der Bedienstelle angeordnet sein kann.

Nach einer Weiterbildung der Erfindung ist ein Anforderungssignal zum Wechsel der in dem Monitor dargestellten Videodaten von einer ersten Beladestelle zu einer zweiten Beladestelle manuell oder mittels einer das Ende des Beladevorgangs an der Beladestelle kennzeichnenden Beladebefehlsbestätigung erzeugbar. Die Beladebefehlsbestätigung kann beispielsweise mittels Betätigen der Bedieneinheit durch die Bedienperson am Ende des Bedienvorgangs oder automatisch mit Abschluss des Beladevorgangs an der ersten Beladestelle erfolgen.

Nach einer bevorzugten Ausführungsform der Erfindung ist der Monitor als ein berührungsempfindlicher Monitor ausgebildet, der neben der Bereitstellung von Beladevorgangsinformationen zusätzlich die Funktion der Bedieneinheit übernimmt. Vorteilhaft kann hierdurch sowohl die Überwachung der Beladevorgänge als auch die Bedienung der Beladevorgänge für mehrere Container platzsparend an einem einzigen Bedienlatz erfolgen.

Nach einer Weiterbildung der Erfindung weist die optische Erkennungseinrichtung eine Anzahl von Videokameras auf, die im Bereich von gegenüberliegenden Längsseiten einer langgestreckten Fördereinrichtung angeordnet sind. Diese können in Förderrichtung und/oder entgegen der Förderrichtung orientiert angeordnet sein, so dass der Bedienperson ein optimaler Überblick über den Beladevorgang vermittelt wird.

Nach einer bevorzugten Ausführungsform der Erfindung sind die Videokameras als Stereo-Videokameras ausgebildet, so dass in Verbindung mit einem 3D-Bildschirm eine räumliche Darstellung der Beladestelle bewirkt wird. Die Bedienperson kann somit einfacher die Beladesituation erfassen.

Nach einer Weiterbildung der Erfindung weist die optische Erkennungseinrichtung eine Anzahl von Sensoren auf, mittels derer die an der Beladestelle angeordneten Baueinheiten bzw. die Ladegüter dreidimensional vermessen werden können. Die hierdurch berechenbaren Ortskoordinaten dieser Gegenstände können beispielsweise dazu genutzt werden, als Hilfsdaten (Zusatzinformationen) in dem Bildschirm eingeblendet zu werden. Die Hilfsdaten können beispielsweise Richtungspfeile für die Bewegung des Ladegutes oder Entfernungsangaben darstellen. Diese Hilfsdaten können auch als Assistenzinformationen der Bedienperson anzeigen, wo das Ladegut innerhalb des Containers abgelegt werden soll, um eine möglichst hohe Ladedichte zu gewährleisten.

Nach einer Weiterbildung der Erfindung ist es vorgesehen, dass aktuelle Zustandsdaten der Fördereinrichtungen in dem Monitor darstellbar sind. Beispielsweise können Funktionszustände der Fördereinrichtung dargestellt werden, die als Assistenzinformationen den von der Bedienperson gesteuerten Beladevorgang vereinfachen.

Nach einer Weiterbildung der Erfindung kann die zentrale Steuereinheit mit einem Videoaufzeichnungsgerät verbunden sein, so dass eine Nachverfolgbarkeit des Ladegutes gewährleistet ist.

Nach einer Weiterbildung der Erfindung ist in der Darstellungsfläche des Monitors ein Beladebestätigungsfeld integriert angeordnet, das durch Berühren der Bedienperson die Beladevorgangsanforderung abschließt. Entweder ist der Beladevorgang für das entsprechende Ladegut beendet oder der von der Bedienperson ausgeführte Bedienvorgang ist beendet, aber noch nicht der wegen der Trägheit der Fördereinrichtung länger andauernde Beladevorgang.

Nach einer Weiterbildung der Erfindung weisen die Fördereinrichtungen jeweils eine Längs- und/oder Querfördereinheit und/oder eine Hubfördereinheit auf, so dass das Ladegut in den jeweiligen Container einfahrbar und innerhalb des Containers an eine gewünschte Ablageposition ablegbar ist.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine schematische Draufsicht auf ein Beladesystem,
- Figur 2: ein Blockschaltbild des Beladesystems,
- Figur 3: ein Blockschaltbild einer zentralen Steuereinheit des Beladesystems und
- Figur 4: eine schematische Vorderansicht eines Monitors, in dem eine Beladestelle dargestellt ist.

Ein System zum Beladen von Containern mit Ladegut in einem Terminal eines Flughafens sieht eine räumliche Trennung zwischen Fördern des Ladegutes einerseits und Bedienen des Beladevorgangs bzw. Ansteuern der Fördereinrichtung andererseits vor.

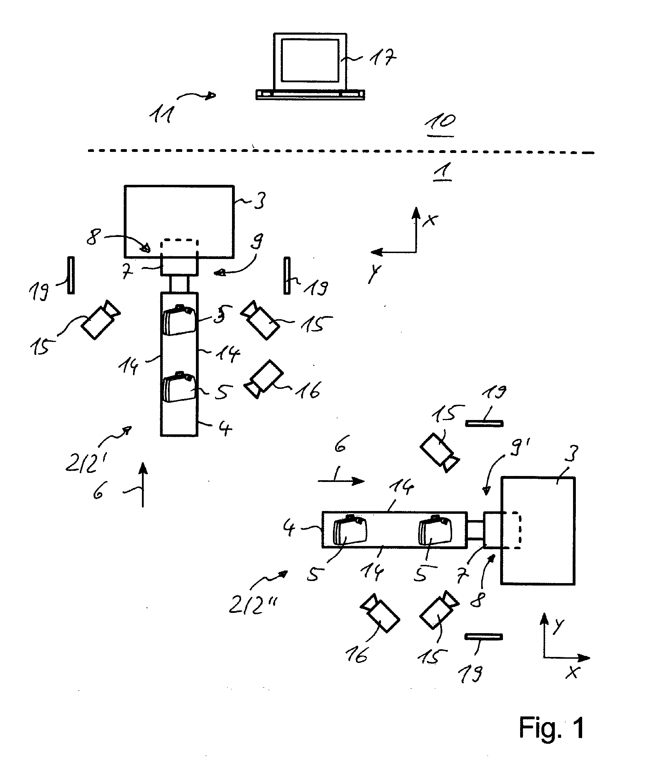

Wie aus Figur 1 ersichtlich ist, ist in einem abgeschlossenen Förderraum 1 des Terminals eine Mehrzahl von Fördereinrichtungen 2 vorgesehen, die jeweils einem Container 3 zugeordnet sind. Die Fördereinrichtungen 2 umfassen als Fördermittel jeweils eine Längsfördereinheit 4 zum Befördern eines Ladegutes 5 in Förderrichtung 6 (x-Richtung). Ferner umfasst die Fördereinrichtung 2 eine sich an einem dem Container 3 zugewandten Ende der Längsfördereinheit 4 anschließende Übergabeeinheit 7, mittels derer das Ladegut 5 sequentiell in den Innenraum des Containers 3 einfahrbar und an einer gewünschten Ablageposition positionierbar ist. Die Übergabeinheit 7 ist teleskopartig von der Längsfördereinheit 4 in Förderrichtung 6 ausfahrbar angeordnet und umfasst einen in x-Richtung das Ladegut 5 befördernden Längsförderer und/oder einen quer zur Förderrichtung 6 das Ladegut befördernden Querförderer.

Alternativ kann die Übergabeeinheit 7 einen um eine Hochachse (z-Achse) drehbaren Drehförderer aufweisen, der das Ladegut 5 in Längs- und/oder Querrichtung fördert.

Der Container 3 ist so ausgebildet, dass er eine Anzahl von Ladegütern 5 aufnehmen kann, die auf diese Weise gruppiert einem Flugzeug zum Transport derselben zugeführt werden können. Der Container 3 kann beispielsweise als ein geschlossener prismenförmiger Körper mit durchgehenden Wänden ausgebildet sein mit einer der Fördereinrichtung 2 zugewandten Beladeöffnung 8. Alternativ kann der Container 3 auch lediglich palettenartig ausgebildet sein mit einem Boden und aufrechten Gitterwänden, wobei die Ladegüter 5 auf dem Boden 5 aufgeschichtet werden.

In dem Förderraum 1 sind mehrere Container 3 sowie jeweils denselben zugeordnete Fördereinrichtungen 2 in einer bestimmten räumlichen Zuordnung zueinander angeordnet. Es liegen somit mehrere Beladestellen 9 vor, an denen das Ladegut 5 den entsprechenden Containern 3 übergeben wird.

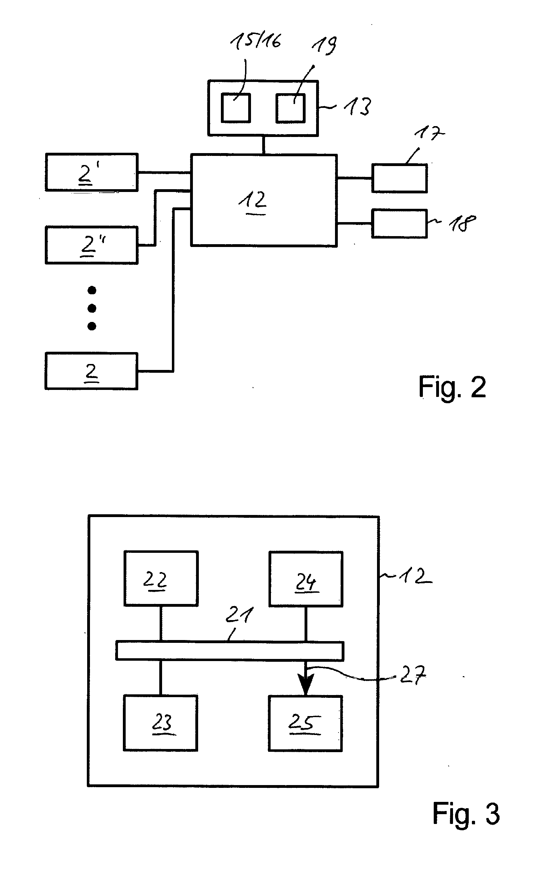

In einem gesonderten Bedienraum 10 ist ortsfern zu den Containern 3 eine zentrale Bedienstelle 11 vorgesehen, an der eine Bedienperson den Beladevorgang beobachtet bzw. steuert. An der zentralen Bedienstelle 11 kann beispielsweise eine zentrale Steuereinheit 12 angeordnet sein, mittels derer der Beladevorgang der Fördereinrichtungen 2 steuerbar ist. Wie besser aus Figur 2 ersichtlich ist, ist die zentrale Steuereinheit 12 mit einer in dem Förderraum 1 angeordneten ersten Fördereinrichtung 2' und mit einer in dem Förderraum 1 angeordneten zweiten Fördereinrichtung 2" bzw. mit weiteren im Förderraum 1 angeordneten Fördereinrichtungen 2 elektrisch verbunden.

Ferner ist die zentrale Steuereinheit 12 mit einer in dem Förderraum 1 angeordneten optischen Erkennungseinrichtung 13 elektrisch verbunden, mittels derer Video- und/oder Messdaten bereitstellbar sind, um die ortsferne Bedienung durch die Bedienperson zu ermöglichen. Im vorliegenden Ausführungsbeispiel weist die optische Erkennungseinrichtung 13 zum einen zu beiden Längsseiten 14 der Längsfördereinheit 4 in Richtung der Beladeöffnung 8 des Containers 3 orientiert angeordnete Videokameras 15 sowie mindestens eine entgegen der Förderrichtung 6 orientierte weitere Videokamera 16 auf. Die Videokameras 15, 16 sind vorzugsweise als Stereovideokameras ausgebildet, so dass die durch sie erzeugten Videodaten in einem an der zentralen Bedienstelle 11 angeordneten 3D-Monitor 17 als 3D-Videoinformationen darstellbar sind.

Die optische Erkennungseinrichtung 13 weist ferner eine Anzahl von Sensoren 19 auf, die verteilt an der Beladestelle 9 angeordnet sind und zum dreidimensionalen Vermessen der Fördereinrichtung 2, 2' und/oder des Ladegutes 5 und/oder der Container 3 dienen. Die von den beispielsweise 3D-Sensoren (3D-Infrarot-Sensoren) erzeugten Sensordaten werden in der zentralen Steuereinheit 12 so verarbeitet, dass sie in das Bild des Monitors 17 als Zusatzinformationen 20 darstellbar bzw. einblendbar sind. Beispielsweise können diese Zusatzinformationen 20 durch Richtungspfeile R oder Entfernungsangaben ausgeführt sein, die der Bedienperson die Bedienung erleichtern. Beispielsweise können die Richtungspfeile R auf eine von einer durch eine Prozessoreinrichtung 21 der zentralen Steuereinheit 12 berechnete Soll-Beladewegstrecke hinweisen, entlang derer das aktuell zu beladende Ladegut in den Innenraum des Containers an eine Ablegestelle innerhalb desselben transportiert werden sollte. Die Zusatzinformationen sind somit Teil eines Assistenzsystems für die Bedienperson, um die Ladegüter 5 an eine optimale Ablegestelle innerhalb des Containers 3 zu verbringen.

Die zentrale Steuereinheit 12 kann Mittel aufweisen, so dass aktuelle Zustandsdaten der Fördereinrichtungen 2 ausgewertet und als Zusatzinformation 20 in dem Monitor 17 dargestellt werden können. Hierdurch wird ein weiteres Assistenzsystem bereitgestellt, dass die Bedienperson über die Funktionszustände der Fördereinrichtungen 2 informiert.

In Figur 3 sind einige wesentliche Funktionseinheiten, - gleichwohl nicht alle - der zentralen Steuereinheit 12 dargestellt. Die zentrale Steuereinheit 12 weist zum einen die Prozessoreinrichtung 21 auf, mittels derer unterschiedliche Steuer-Verarbeitungsprogramme ablaufbar sind. Die zentrale Steuereinheit 12 weist eine Förderansteuerung 22 auf, mittels derer in Abhängigkeit von über die Bedieneinheit eingegebenen Förderbefehlen die Übergabeeinheiten 7 die jeweiligen Fördereinrichtungen 2 ansteuerbar sind.

Ferner weist die zentrale Steuereinheit 12 eine Bildverarbeitung 23 auf, in der die von der optischen Erkennungseinrichtung 13 zur Verfügung gestellten Videodaten verarbeitet und für den Monitor 17 bereitgestellt werden. Die Bildverarbeitung 23 dient somit zur Ansteuerung des Monitors 17.

Ferner weist die zentrale Steuereinheit 12 eine Eingabeverarbeitung 24 auf, mittels derer die über den berührungsempfindlichen Monitor 17 durch die Bedienperson eingegebenen Förderbefehle verarbeitet und dann der Förderansteuerung übergeben werden, so dass die Übergabeeinheiten 7 in Abhängigkeit von dem eingegebenen Förderbefehlen bewegt werden.

Zusätzlich ist die zentrale Steuereinheit 12 mit einem Videoaufzeichnungsgerät 18 verbunden, in dem die jeweiligen Beladevorgänge zur Nachverfolgbarkeit protokolliert werden.

Ferner weist die zentrale Steuereinheit 12 eine Bildumschaltung 25 zum Wechsel der in dem Monitor 17 dargestellten Videodaten 26 auf. Ein Wechsel der in dem Monitor 17 dargestellten Videodaten 26 erfolgt immer dann, wenn ein entsprechendes Anforderungssignal 27 vorliegt. Das Anforderungssignal 27 wird beispielsweise dann generiert, wenn die Bedienperson auf ein Beladebestätigungsfeld 28 drückt und damit eine Beladebefehlsbestätigung für das Ende des Beladevorgangs an der ersten Beladestelle 9 signalisiert.

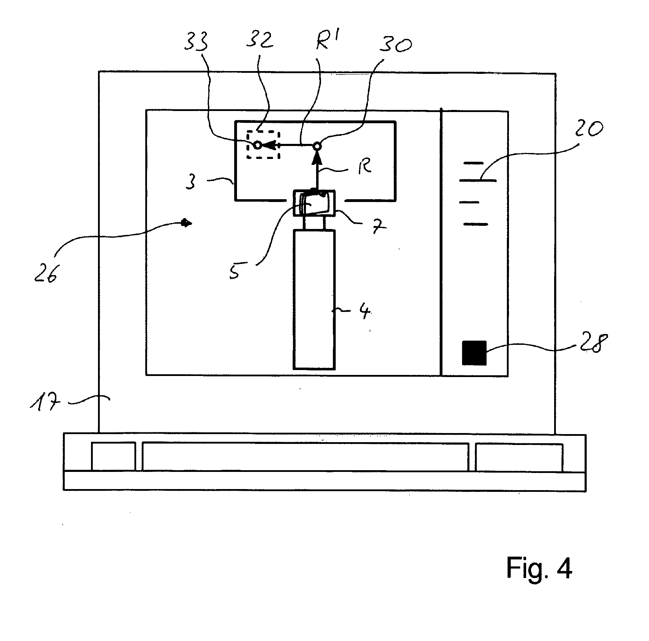

In Figur 4 sind die im Monitor dargestellten Videodaten 26 schematisch dargestellt. Mittels der Videokameras 15, 16 wird in dem Monitor 17 die Beladestelle 9 dreidimensional visualisiert. Das als ein Gepäckstück 5 ausgebildete Ladegut befindet sich gerade an der Übergabeeinheit 7. Durch Bewegen eines Fingers der Bedienperson an der Oberfläche des Monitors 7 entlang einer durch Richtungspfeil R vorgegebenen Strecke 29 werden Eingabedaten erzeugt, die in der zentralen Steuereinheit 12 so umgerechnet werden, dass durch Ansteuerung der Übergabeeinheit 7 das Gepäckstück 5 entlang einer zu der Strecke 29 korrespondierenden ersten Beladewegstrecke bewegt wird. Diese lineare Bewegung in R-Richtung kann vermittels einer ersten Bedienbestätigung 30 abgeschlossen werden. Die erste Bedienbestätigung 30 kann beispielsweise durch Entfernen des Fingers von der Oberfläche des Monitors 17 bewirkt werden.

Soll das Gepäckstück 5 dann durch Vorgabe der Pfeilrichtung R' entlang einer Beladewegstrecke in Querrichtung an eine gewünschte oder vorgegebene Ablagestelle 32 bewegt werden, bewegt die Bedienperson ihren Finger an der Oberfläche des Monitors 17 entlang der durch den Pfeil R' vorgegebenen zweiten Strecke 31, bis durch Entfernen des Fingers von der Oberfläche des Monitors 17 die zweite Beladewegstrecke 31 durch eine zweite Bedienbestätigung 33 bestätigt wird. Wenn kein weiterer Förderbefehl durch Anlegen des Fingers an der Oberfläche des Monitors 17 erzeugt wird, wird das Gepäckstück 5 mittels der Fördereinrichtung 2 an die gewünschte Ablagestelle 32 befördert.

Mittels der rückseitig orientierten Videokamera 16 erfährt die Bedienperson von über die Längsfördereinheit 4 weiter herangeführten Gepäckstücken 5, so dass die Eingabe der entsprechenden Beladewegstrecken an dem Monitor 17 die Fördereinrichtung 6 so angesteuert wird, dass das Gepäckstück 5 an die gewünschte Ablagestelle verbracht wird. Steht kein weiteres Gepäckstück 5 zur Beladung an der ersten Beladestelle 9 an, kann die Bedienperson durch Betätigen eines Beladebetätigungsfeldes 28 an der Oberfläche des Monitors 17 das Anforderungssignal (Beladebefehlsbestätigung) auslösen, so dass die Darstellung des Monitors 17 von der ersten Beladestelle 9 zu einer zweiten Beladestelle 9' wechselt. Die Bedienperson kann nun den Beladevorgang an der zweiten Beladestelle 9' in der gleichen Weise über die berührungsempfindliche Oberfläche des Monitors 17 durchführen. Das Anforderungssignal 27 kann somit zum einen durch eine Beladebefehlsbestätigung der Bedienperson erzeugt werden. Zum anderen kann das Anforderungssignal 27 auch selbsttätig durch die zentrale Steuereinheit 12 erzeugt werden, wenn vermittels der optischen Erkennungseinrichtung 13 festgestellt wird, dass an der aktuell dargestellten Beladestelle 9 kein weiteres Gepäckstück 5 zum Beladen ansteht.

Nach einer nicht dargestellten alternativen Ausführungsform kann die Bedienung auch über ein gesondertes Steuerpult mit einem Joystick erfolgen. Der Monitor würde dann ausschließlich zur Ausgabe von Bild- bzw. Videodaten dienen.

## Patentansprüche

1. Beladesystem zum Beladen von Containern (3) mit Ladegut (5) in einem Terminal eines Flughafens, mit einer Anzahl von jeweils den Containern (3) zugeordneten Fördereinrichtungen (2, 2', 2"), mittels derer das Ladegut (5) den Containern (3) jeweils an einer Beladestelle (9, 9') sequentiell zuführbar und innerhalb derselben positionierbar ist, und mit einer Bedieneinheit zum Ansteuern von Fördermitteln der Fördereinrichtung (2, 2', 2") zum Verbringen des Ladegutes (5) in eine Ablageposition innerhalb des Containers (3), **dadurch gekennzeichnet,**
- **dass** den Fördereinrichtungen (2, 2', 2") und/oder den Beladestellen (9, 9') jeweils eine optische Erkennungseinrichtung (13) zum Erfassen von Videodaten zugeordnet sind,
- **dass** eine zentrale Steuereinheit (12) vorgesehen ist, enthaltend eine Bildverarbeitung (23) zur Verarbeitung von durch die optische Erkennungseinrichtung (13) bereitgestellten Videodaten und zur Ansteuerung eines Monitors (17),
- **dass** ein Monitor (17) zur Darstellung der Videodaten vorgesehen ist,
- **dass** der Monitor (17) und die Bedieneinheit ortsfern von den Beladestellen (9, 9') an einer zentralen Bedienstelle (11) angeordnet sind,
- **dass** die zentrale Steuereinheit (12) eine Förderansteuerung (22) aufweist, mittels derer in Abhängigkeit von über die Bedieneinheit (17) eingegebenen Förderbefehlen die jeweiligen Fördereinrichtungen (2, 2', 2'') ansteuerbar sind, und
- **dass** die zentrale Steuereinheit (12) eine Bildumschaltung (25) aufweist, so dass in Abhängigkeit von einem Anforderungssignal (27) ein Wechsel der in dem Monitor (17) dargestellten Videodaten von einer ersten Beladestelle (9) zu einer zweiten Beladestelle (9') erfolgt.

2. Beladesystem nach Anspruch 1, **dadurch gekennzeichnet, dass** das Anforderungssignal (27) zum Wechsel der in dem Monitor (17) dargestellten Videodaten (26) von einer ersten Beladestelle (9) zu einer zweiten Beladestelle (9') mittels einer das Ende des Beladevorgangs an der ersten Beladestelle (9) kennzeichnenden Beladebefehlsbestätigung erzeugbar ist.

3. Beladesystem nach Anspruch 1 oder 2, **dadurch gekennzeichnet, dass** der Monitor (17) als berührungsempfindlicher Monitor (17) ausgebildet ist zur Eingabe von Beladewegstrecken des Ladegutes (5) von einer Längsfördereinheit (4) außerhalb des Containers (3) zu einer Ablageposition (32) innerhalb des Containers (3), wobei die Beladewegstrecken in einer Eingabeverarbeitung (24) der zentralen Steuereinheit (12) umgewandelt werden in Förderbefehle für die Förderansteuerung (22).

4. Beladesystem nach einem der Ansprüche 1 bis 3, **dadurch gekennzeichnet, dass** die optische Erkennungseinrichtung (13) eine Anzahl von Videokameras (15, 16) aufweist, die im Bereich von gegenüberliegenden Längsseiten (14) der zu den jeweiligen Containern (3) hinführenden Längsfördereinheit (4) in Förderrichtung (6) derselben zu dem Container (3) hin orientiert angeordnet sind und/oder entgegen der Förderrichtung (6) der Längsfördereinheit (4) orientiert angeordnet ist.

5. Beladesystem nach einem der Ansprüche 1 bis 4, **dadurch gekennzeichnet, dass** die Videokamera (15, 16) als eine Stereo-Videokamera ausgebildet ist.

6. Beladesystem nach einem der Ansprüche 1 bis 5, **dadurch gekennzeichnet, dass** die optische Erkennungseinrichtung (13) eine Anzahl von Sensoren (19) aufweist zum dreidimensionalen Vermessen der an der Beladestelle (9, 9') angeordneten Fördereinrichtung (2, 2', 2'') und/oder des Ladegutes (5) und/oder des Containers (3).

7. Beladesystem nach einem der Ansprüche 1 bis 6, **dadurch gekennzeichnet, dass** die Bildverarbeitung (23) der zentralen Steuereinheit (12) Mittel aufweist, um aus den von den Sensoren (19) gelieferten Sensordaten in die Darstellung des Monitors (17) einblendbare Zusatzinformationen (20) zu generieren.

8. Beladesystem nach einem der Ansprüche 1 bis 7, **dadurch gekennzeichnet, dass** die zentrale Steuereinheit (12) Mittel aufweist, um aktuelle Zustandsdaten der Fördereinrichtungen (6) in dem Monitor (17) darzustellen.

9. Beladesystem nach einem der Ansprüche 1 bis 8, **dadurch gekennzeichnet, dass** der Monitor (17) als ein 3D-Monitor ausgebildet ist.

10. Beladesystem nach einem der Ansprüche 1 bis 9, **dadurch gekennzeichnet, dass** die zentrale Steuereinheit (12) mit einem Videoaufzeichnungsgerät (18) verbunden ist zur Aufzeichnung der Beladevorgänge.

11. Beladesystem nach einem der Ansprüche 1 bis 10, **dadurch gekennzeichnet, dass** der berührungsempfindliche Monitor (17) von der zentralen Steuereinheit (12) derart ansteuerbar ist, dass nur Videodaten einer einzigen Beladestelle (9, 9') darstellbar sind.

12. Beladesystem nach einem der Ansprüche 1 bis 11, **dadurch gekennzeichnet, dass** in dem berührungsempfindlichen Monitor (17) ein Beladebestätigungsfeld (28) darstellbar ist, das durch Berühren das Anforderungssignal (27) bewirkt, mittels dessen von der Darstellung der aktuellen Beladestelle (9) zu der Darstellung einer anderen Beladestelle (9') in dem Monitor (17) gewechselt wird.

13. Beladesystem nach einem der Ansprüche 1 bis 12, **dadurch gekennzeichnet, dass** die Fördereinrichtung (2, 2', 2") als Fördermittel eine Längsfördereinheit (4), eine sich an einem Ende der Längsfördereinheit (4) anschließende Übergabeeinheit (7) zum Ablegen des Ladeguts (5) in einer horizontalen Ebene und eine Hubfördereinheit zum Ablegen des Ladegutes (5) in einer bestimmten Höhe ermöglicht.

## Claims

1. Loading system for loading containers (3) with cargo (5) in an airport terminal, having a number of conveyor devices (2, 2', 2'') which are allocated in each case to the containers (3) and by means of which the cargo (5) can be supplied sequentially to the containers (3) in each case at a loading point (9, 9') and can be positioned within same, and having a control unit for controlling conveying means of the conveyor device (2, 2', 2'') for moving the cargo (5) to a deposit position within the container (3), **characterised in that**
- the conveyor devices (2, 2', 2") and/or the loading points (9, 9') are each allocated an optical detection device (13) for detecting video data,
- a central control unit (12) is provided, containing an image processor (23) for processing video data provided by the optical detection device (13) and for controlling a monitor (17),
- a monitor (17) is provided for displaying the video data,
- the monitor (17) and the control unit are disposed remotely from the loading points (9, 9') at a central control point (11),
- the central control unit (12) has a conveyor controller (22), by means of which the respective conveyor devices (2, 2', 2") can be controlled in dependence upon conveyor commands input via the control unit (17), and
- the central control unit (12) has an image switching unit (25), so that the video data displayed on the monitor (17) is changed from a first loading point (9) to a second loading point (9') in dependence upon a request signal (27).

2. Loading system as claimed in claim 1, **characterised in that** the request signal (27) for changing the video data (26) displayed on the monitor (17) from a first loading point (9) to a second loading point (9') can be generated by means of a loading command confirmation denoting the end of the loading procedure at the first loading point (9).

3. Loading system as claimed in claim 1 or 2, **characterised in that** the monitor (17) is designed as a touch-sensitive monitor (17) for inputting loading distances of the cargo (5) from a longitudinal conveyor unit (4) outside the container (3) to a deposit position (32) inside the container (3), wherein the loading distances (24) are converted in an input processor (24) of the central control unit (12) are converted into conveyor commands for the conveyor controller (22).

4. Loading system as claimed in any one of claims 1 to 3, **characterised in that** the optical detection device (13) has a number of video cameras (15, 16) which are disposed in the region of opposite longitudinal sides (14) of the longitudinal conveyor unit (4), which leads to the respective containers (3), so as to be oriented in the conveying direction (6) thereof towards the container (3) and/or is disposed so as to be oriented in the direction opposite the conveying direction (6) of the longitudinal conveyor unit (4).

5. Loading system as claimed in any one of claims 1 to 4, **characterised in that** the video camera (15, 16) is designed as a stereo-video camera.

6. Loading system as claimed in any one of claims 1 to 5, **characterised in that** the optical detection device (13) has a number of sensors (19) for three-dimensionally measuring the conveyor device (2, 2', 2''), which is disposed at the loading point (9, 9'), and/or the cargo (5) and/or the container (3).

7. Loading system as claimed in any one of claims 1 to 6, **characterised in that** the image processor (23) of the central control unit (12) has means for generating additional information (20), which can be shown on the display of the monitor (17), from the sensor data supplied by the sensors (19).

8. Loading system as claimed in any one of claims 1 to 7, **characterised in that** the central control unit (12) has means for displaying current status data of the conveyor devices (6) on the monitor (17).

9. Loading system as claimed in any one of claims 1 to 8, **characterised in that** the monitor (17) is designed as a 3D monitor.

10. Loading system as claimed in any one of claims 1 to 9, **characterised in that** the central control unit (12) is connected to a video recording device (18) for recording the loading procedures.

11. Loading system as claimed in any one of claims 1 to 10, **characterised in that** the touch-sensitive monitor (17) can be controlled by the central control unit (12) such that only video data of a single loading point (9, 9') can be displayed.

12. Loading system as claimed in any one of claims 1 to 11, **characterised in that** on the touch-sensitive monitor (17) a loading confirmation field (28) can be displayed which by touch produces the request signal (27), by means of which a change is made from the display of the current loading point (9) to the display of a different loading point (9') on the monitor (17).

13. Loading system as claimed in any one of claims 1 to 12, **characterised in that** the conveyor device (2, 2', 2") as a conveying means enables a longitudinal conveyor unit (4) and a transfer unit (7) adjoining the end of the longitudinal conveyor unit (4) to deposit the cargo (5) in a horizontal plane, and enables a lifting conveyor unit to deposit the cargo (5) at a specific height.

## Revendications

1. Système de chargement de conteneurs (3) avec des marchandises (5) dans un terminal d' un aéroport, lequel système est doté de plusieurs dispositifs de transport (2, 2' , 2''), respectivement associés aux conteneurs (3), au moyen desquels les marchandises (5) peuvent être conduites séquentiellement aux conteneurs (3), dans un poste de chargement (9, 9') et positionnées à l'intérieur de celui-ci, et d' une unité de commande servant à actionner les moyens de transport du dispositif de transport (2, 2' , 2") afin d'amener les marchandises (5) dans une position de dépôt à l'intérieur du conteneur (3), **caractérisé en ce que**
- à chacun des dispositifs de transport (2, 2', 2" ) et ou des postes de chargement (9, 9') est associé un dispositif d'identification optique (13) pour la saisie de données vidéo,
- une unité de commande centrale (12) est prévue, laquelle comprend un dispositif de traitement d' images (23) pour le traitement de données vidéo mises à disposition par le dispositif d'identification optique (13) et pour la commande d' un moniteur (17),
- un moniteur (17) est prévu pour la visualisation des données vidéo,
- le moniteur (17) et l' unité de commande sont disposés dans un poste de manoeuvre (11) éloigné des postes de chargement (9, 9'),
- l'unité de manoeuvre (12) est dotée d' un dispositif de commande de transport (22) au moyen duquel les dispositifs de transport (2, 2' , 2'') peuvent être respectivement commandés en fonction des ordres de transport donnés par l'intermédiaire de l' unité de manoeuvre (11), et
- l'unité de commande centrale (12) comprend un circuit de commutation d'images (25) de sorte qu' un transfert des données vidéo, visualisées sur le moniteur (17), soit effectué d' un premier poste de chargement (9) à un deuxième poste de chargement (9') en fonction d' un signal de requête (27).

2. Système de chargement selon la revendication 1, **caractérisé en ce que** le signal de requête (27) pour le transfert des données vidéo visualisées par le moniteur (17) d' un premier poste de chargement (9) à un deuxième poste de chargement (9') peut être généré au moyen d' un actionnement d'ordre de chargement qui caractérise la fin de l'opération de chargement dans le premier poste de chargement (9).

3. Système de chargement selon revendication 1 ou 2, **caractérisé en ce que** le moniteur (17) est réalisé sous la forme d' un moniteur tactile (17), destiné à l'introduction de parcours de chargement de marchandises (5) d' une unité de transport longitudinale (4) à l'extérieur du conteneur (3) dans une position de dépôt (32) à l'intérieur du conteneur (3), sachant que, dans un système de traitement d'introductions (24) de l' unité de commande centrale (12), les parcours de chargement sont convertis en ordres de transport à l'intention du système de commande de transport (22).

4. Système de chargement selon l' une des revendications 1 à 3, **caractérisé en ce que** le dispositif d'identification optique (13) présente une pluralité de caméras vidéo (15, 16) qui sont disposées dans la région de côtés longitudinaux (14) opposés de l'unité de transport longitudinal (4) conduisant aux conteneurs (3) respectifs, en étant orientées dans la direction (6) de celle-ci et / ou orientées à l'opposé de la direction de transport (6) de l'unité de transport longitudinal (4).

5. Système de chargement selon l' une des revendications 1 à 4, **caractérisé en ce que** la caméra vidéo (15, 16) est réalisée sous la forme d' une caméra vidéo stéréo.

6. Système de chargement selon l' une des revendications 1 à 5, **caractérisé en ce que** le dispositif d'identification optique (13) présente une pluralité de détecteurs (19) pour la mesure tridimensionnelle du dispositif de transport (2, 2', 2") disposé dans le poste de chargement (9, 9') et / ou des marchandises (5) et / ou du conteneur (3).

7. Système de chargement selon l'une des revendications 1 à 6, **caractérisé en ce que** le dispositif de traitement d'images de l'unité de commande centrale (12) présente des moyens (23) qui sont destinés à générer, à partir des données détectées, délivrées par les détecteurs (19), des informations supplémentaires (20) pouvant être visualisées au moyen du moniteur (17).

8. Système de chargement selon l' une des revendications 1 à 7, **caractérisé en ce que** l' unité de commande centrale (12) présente des moyens servant à visualiser, au moyen du moniteur (17), des données d'état actuelles, relatives aux dispositifs de transport (6).

9. Système de chargement selon l'une des revendications 1 à 8, **caractérisé en ce que** le moniteur (17) est un moniteur 3D.

10. Système de chargement selon l'une des revendications 1 à 9, **caractérisé en ce que** l'unité de commande centrale (12) est reliée à un appareil d'enregistrement vidéo (18) destiné à l'enregistrement des opérations de chargement.

11. Système de chargement selon l'une des revendications 1 à 10, **caractérisé en ce que** le moniteur tactile (17) peut être commandé par l' unité de commande centrale (12) de telle sorte que seules les données vidéo d' un seul poste de chargement (9, 9') puissent être représentées.

12. Système de chargement selon l' une des revendications 1 à 11, **caractérisé en ce que** le moniteur tactile (17) permet de visualiser un champ de confirmation de chargement (28) qui, par effleurement, provoque le signal de requête (27) au moyen duquel est effectué sur le moniteur (17) un passage d'une visualisation du poste de chargement actuel (9) à une visualisation d' un autre poste de chargement (9').

13. Système de chargement selon l' une des revendications 1 à 12, **caractérisé en ce que** le dispositif de transport (2, 2', 2"), en tant que moyen de transport, comprend une unité de transport longitudinal (4), une unité de transfert (7), raccordée à une extrémité de ladite unité de transport longitudinal (4) pour le dépôt des marchandises (5) sur un plan horizontal, et une unité de levage pour le dépôt des marchandises (5) à une hauteur déterminée.
